# EUROPÄISCHE PATENTANMELDUNG

(11) **EP 1 744 578 A1**
(43) Veröffentlichungstag der Anmeldung: **17.01.2007**
(21) Anmeldenummer: 05015065.5
(22) Anmeldetag: 12.07.2005
(51) Int. Cl.: H04Q 7/38, H04M 3/56

(54) **Verfahren zur Signalisierung einer Aufforderung zur Teilnahme an einem bestehenden Gruppenruf oder Rundruf innerhalb eines GSM-Mobilfunknetzes**

(71) Anmelder: DB Telematik GmbH, 65760 Eschborn (DE)
(72) Erfinder: Masur, Klaus-Dieter, 61476 Kronberg (DE)
(74) Vertreter: Zinken-Sommer, Rainer

(57) **Zusammenfassung**

Die Erfindung betrifft ein Verfahren zur Signalisierung einer Aufforderung zur Teilnahme an einem bestehenden Gruppenruf oder Rundruf innerhalb eines Mobilfunknetzes, welche von einem rufenden Teilnehmer an einen gerufenen Teilnehmer dieses Mobilfunknetzes abgegeben wird. Hierzu wird vom Mobilfunk-Endgerät (5) des rufenden Teilnehmers eine Einzelverbindungsaufbaunachricht (6) über das Mobilfunknetz an das Endgerät (3) des aufgeforderten bzw. gerufenen Teilnehmers gesandt und diese sodann vom Endgerät (3) des gerufenen Teilnehmers mittels einer über das Mobilfunknetz an das Mobilfunk-Endgerät des rufenden Teilnehmers zurückgesandten Einzelverbindungsabbaunachricht (7) quittiert, wobei in der vom Mobilfunk-Endgerät des rufenden Teilnehmers generierten Einzelverbindungsaufbaunachricht mindestens ein erstes Datenelement zur eindeutigen Referenzierung des bestehenden Gruppenrufes bzw. Rundrufes sowie ein zweites Datenelement zur Signalisierung der Aufforderung an den gerufenen Teilnehmer übertragen wird.

## Beschreibung

Die Erfindung betrifft ein Verfahren zur Signalisierung einer Aufforderung zur Teilnahme an einem bestehenden Gruppenruf oder Rundruf innerhalb eines Mobilfunknetzes, welche von einem rufenden Teilnehmer an einen gerufenen Teilnehmer dieses Mobilfunknetzes abgegeben wird.

In Mobilfunknetzen nach dem GSM-Standard (Global System for Mobile Communication) sind Gruppen- und Rundrufe vorgesehen. Hierbei werden eine Vielzahl von Teilnehmern in einer oder mehreren Funkzellen gerufen (d.h. in den Gruppen- bzw. Rundruf einbezogen), wobei bei einem Gruppenruf jeweils nur ein Teilnehmer sprechen kann, während alle anderen Teilnehmer zuhören. Besonders definierte Teilnehmer (sog. "Dispatcher") können jederzeit sprechen. Bei einem Rundruf kann hingegen ausschliesslich der Initiator dieses Rundrufes sprechen, während alle anderen Teilnehmer ausschliesslich zuhören können.
In der Praxis hat es sich jedoch gezeigt, dass einzelne Mitglieder eines Gruppen- oder Rundrufes aus nicht weiter zu erläuternden Gründen einen bereits aufgebauten Ruf wieder verlassen oder diesen aktiven Ruf auf "Halten" legen. Sie sind somit nicht mehr über den Gruppen- bzw. Rundruf ansprechbar.

Der Erfindung liegt die Aufgabe zugrunde, ein Verfahren zur Signalisierung einer Aufforderung zur Teilnahme an einem bestehenden Gruppenruf oder Rundruf innerhalb eines Mobilfunknetzes, welche von einem rufenden Teilnehmer an einen gerufenen Teilnehmer dieses Mobilfunknetzes abgegeben wird, anzugeben, welches es ermöglicht, dass der gerufene Teilnehmer ohne Aufbau eines neuen Rufes wieder am bereits bestehenden Ruf beteiligt.

Diese Aufgabe wird in Verbindung mit dem Oberbegriff des Patentanspruches erfindungsgemäß dadurch gelöst, dass vom Mobilfunk-Endgerät des rufenden Teilnehmers eine Einzelverbindungsaufbaunachricht über das Mobilfunknetz an das Endgerät des aufgeforderten bzw. gerufenen Teilnehmers gesandt und diese sodann vom Endgerät des gerufenen Teilnehmers mittels einer über das Mobilfunknetz an das Mobilfunk-Endgerät des rufenden Teilnehmers zurückgesandten Einzelverbindungsabbaunachricht quittiert wird, wobei in der vom Mobilfunk-Endgerät des rufenden Teilnehmers generierten Einzelverbindungsaufbaunachricht mindestens ein erstes Datenelement zur eindeutigen Referenzierung des bestehenden Gruppenrufes bzw. Rundrufes sowie ein zweites Datenelement zur Signalisierung der Aufforderung an den gerufenen Teilnehmer übertragen wird.
Auf diese Weise wird eine verbindungslose Signalisierung (d.h. eine Signalisierung ohne Einzelverbindungsaufbau) ermöglicht, die einen Verzicht auf eine Sprachkommunikation zwischen dem rufenden und dem gerufenen Teilnehmer ermöglicht. Der Verzicht auf eine Sprachkommunikation ist vorteilhaft, da sie zum einen zusätzliche Bedienhandlungen und damit Zeit beansprucht; zum anderen können für die Teilnehmer des FunkKommunikationssystems betriebliche Vorschriften existieren, die Einzelverbindungen mit freier Sprachkommunikation zwischen den Teilnehmern ausschliessen.

Eine weitere Ausführungsform sieht vor, dass in der Einzelverbindungsaufbaunachricht mindestens ein Datenelement zur Kennzeichnung der Priorität der Einzelverbindungsaufbaunachricht übertragen wird. Somit ist es möglich, dem gerufenen Teilnehmer die Dringlichkeit der Aufforderung zur Wiederteilnahme an einem bestehenden Gruppen- bzw. Rundruf zu signalisieren.

In alternativer oder ergänzender Weise sieht die Erfindung vor, dass in mindestens einem Datenelement der Verbindungsaufbaunachricht die funktionale Identität des rufenden Teilnehmers übertragen wird. Dieses Datenelement kann der gerufene Teilnehmer zur Beurteilung der Wichtigkeit der signalisierten Teilnahme an einem bestehenden Gruppen- bzw. Rundruf auswerten.

Der Erfindungsgedanke wird in nachfolgendem Ausführungsbeispiel erläutert. Es zeigt:

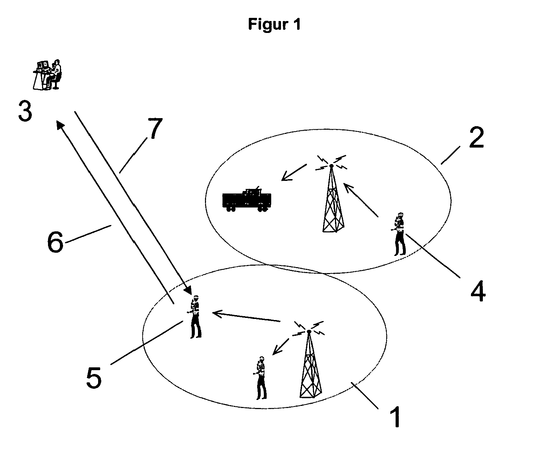

- **Figur 1**: Schematische Darstellung eines Szenarios zur Anwendung im Rangierfunk mit zwei Funkzellen auf Basis eines Gruppenrufes, mehrerer mobiler Rangierfunkteilnehmer sowie einem mobilen Rangierfunkteilnehmer (z.B. Disponent)

Gemäss Figur 1 nehmen an einem als Gruppenruf konzipierten Rangierfunk-Ruf mobile Rangierfunkteilnehmer (4, 5) in zwei Funkzellen (1, 2) teil. Einer der Teilnehmer (4) spricht, während die übrigen Teilnehmer (5) zuhören. Des weiteren ist ein ortsfester Rangierfunkteilnehmer ("Dispatcher") (3) in den Gruppenruf integriert. Es kann sich hierbei beispielsweise um einen Disponenten oder aber auch um Stellwerks-Personal handeln. Zu Beginn des Gruppenrufes war dieser Dispatcher in den Gruppenruf eingebunden. Jedoch hat er diesen später mittels seines Terminals verlassen beziehungsweise auf "Halten" gelegt. Während dieses andauernden Rangierfunkrufs wünscht ein anderer, noch in den Gruppenruf eingebundener Rangierfunkteilnehmer (5), diesen Dispatcher wieder in den Rangierfunkruf einzubinden. Zur verbindungslosen Signalisierung an den Dispatcher bezüglich seines Wiedereintritts in einen existierenden Rangierfunkruf sendet das Terminal des in den Gruppenruf eingebundenen Rangierfunkteilnehmers eine Einzelverbindungsaufbaunachricht (6) über das GSM-R Mobilfunknetz an das Dispatcherterminal. Das Senden der Nachricht wird über das MMI (Mensch-Maschine-Interface) des Terminals, z.B. durch das Drücken einer speziellen Taste, veranlasst. In der Einzelverbindungsaufbaunachricht befindet sich ein spezielles Informationselement, das zum einen dem Dispatcher (3) den gewünschten Wiedereintritt in den Gruppenruf verbindungslos signalisiert sowie zum anderen die Gruppenrufreferenznummer, welche eindeutig den zugehörigen Gruppenruf kennzeichnet. Das Terminal des Dispatchers sendet anschließend eine Einzelverbindungsabbaunachricht (7) über das GSM-R Mobilfunknetz an das Terminal, welches zuvor die Einzelverbindungsaufbaunachricht gesendet hatte. Eine Sprachkommunikation zwischen dem Dispatcher und dem die Einzelverbindungsaufbaunachricht generierenden mobilen Rangierfunkteilnehmer findet nicht statt. Der Dispatcher kann anschließend wieder mittels Wählen der zum Gruppenruf zugehörigen Rufnummer oder durch Zurückholen des gehaltenen Gruppenrufes am Dispatcherterminal wieder mit dem Rangierfunkruf verbunden werden und an der Gruppenkommunikation teilnehmen.

### Bezugszeichenliste

- 1: erste Funkzelle
- 2: zweite Funkzelle
- 3: Dispatcher
- 4: mobiler Rangierfunkteilnehmer als Sprecher
- 5: mobiler Rangierfunkteilnehmer als Zuhörer
- 6: Einzelverbindungsaufbaunachricht
- 7: Einzelverbindungsabbaunachricht

## Patentansprüche

1. Verfahren zur Signalisierung einer Aufforderung zur Teilnahme an einem bestehenden Gruppenruf oder Rundruf innerhalb eines Mobilfunknetzes, welche von einem rufenden Teilnehmer an einen gerufenen Teilnehmer dieses Mobilfunknetzes abgegeben wird,
**dadurch gekennzeichnet, dass**
vom Mobilfunk-Endgerät des rufenden Teilnehmers (5) eine Einzelverbindungsaufbaunachricht (6) über das Mobilfunknetz an das Endgerät des aufgeforderten bzw. gerufenen Teilnehmers (3) gesandt und diese sodann vom Endgerät des gerufenen Teilnehmers mittels einer über das Mobilfunknetz an das Mobilfunk-Endgerät des rufenden Teilnehmers zurückgesandten Einzelverbindungsabbaunachricht (7) quittiert wird, wobei in der vom Mobilfunk-Endgerät des rufenden Teilnehmers generierten Einzelverbindungsaufbaunachricht mindestens ein erstes Datenelement zur eindeutigen Referenzierung des bestehenden Gruppenrufes bzw. Rundrufes sowie ein zweites Datenelement zur Signalisierung der Aufforderung an den gerufenen Teilnehmer übertragen wird.

2. Verfahren zur Signalisierung einer Aufforderung zur Teilnahme an einem bestehenden Gruppenruf oder Rundruf innerhalb eines Mobilfunknetzes nach Anspruch 1, **dadurch gekennzeichnet, dass** in der Einzelverbindungsaufbaunachricht (6) mindestens ein Datenelement zur Kennzeichnung der Priorität der Einzelverbindungsaufbaunachricht übertragen wird.

3. Verfahren zur Signalisierung einer Aufforderung zur Teilnahme an einem bestehenden Gruppenruf oder Rundruf innerhalb eines Mobilfunknetzes nach Anspruch 1 oder 2, **dadurch gekennzeichnet, dass** in mindestens einem Datenelement der Einzelverbindungsaufbaunachricht (6) die funktionale Identität des rufenden Teilnehmers (5) übertragen wird.
